# EUROPEAN PATENT APPLICATION

(11) **EP 4 066 973 A1**
(43) Date of publication of application: **05.10.2022**
(21) Application number: 21166334.9
(22) Date of filing: 31.03.2021
(51) Int. Cl.: B23C 5/22

(54) **DOUBLE-SIDED TANGENTIAL CUTTING INSERT**

(71) Applicant: Pramet Tools, S.R.O., 787 53 Sumperk (CZ)
(72) Inventor: BITTNER, Jan, 787 53 Sumperk (CZ); MIHÀLIK, Patrik, 787 53 Sumperk (CZ); KRAHULA, Pavel, 787 53 Sumperk (CZ)
(74) Representative: Sandvik

(57) **Abstract**

A double-sided tangential cutting insert 21, comprising: two identical opposing end surfaces 25; a peripheral side surface 29 extending between the opposing end surfaces 25, the peripheral side surface 29 comprising two opposing identical major side surfaces 31, two opposing identical minor side surfaces 49 and four corner surfaces 61, each corner surface 61 inter-connecting a major side surface 31 and an adjacent minor side surface 49; a hole 35 extending through the insert 21 from one of the major side surfaces 31 to the other of the major side surfaces 31; each of said end surfaces 25 comprising: two spaced apart major cutting edges 33, each major cutting edge being formed at an intersection between the end surface 25 and one of the major side surfaces 31; two spaced apart minor cutting edges 51, each minor cutting edge being formed at an intersection between the end surface 25 and one of the minor side surfaces 49; two diagonally opposite raised corners 26, each raised corner 26 having a corner cutting edge 63c, each corner cutting edge 63c being formed at an intersection between the end surface 25 and one of the corner surfaces 61, each corner cutting edge 63c positioned between a major cutting edge 33 and a minor cutting edge 51; two diagonally opposite lowered corners 27, each lowered corner 27 having a corner non-cutting edge 63nc, each corner non-cutting edge 63nc being formed at an intersection between the end surface 25 and one of the corner surfaces 61, each corner non-cutting edge 63nc positioned between a major cutting edge 33 and a minor cutting edge 51; major rake surfaces 37 adjacent the major cutting edges 31; minor rake surfaces 53 adjacent the minor cutting edges 51; cutting corner rake surfaces 65c adjacent the corner cutting edges 63c; and non-cutting corner rake surfaces 65nc adjacent the non-cutting edges 63nc, wherein at least one cutting corner rake surface 65c comprises a groove 67 that extends in a generally inward direction.

## Description

### TECHNICAL FIELD

The present invention relates to a double-sided cutting insert for use in a metal cutting milling tool intended for chip removing machining. The double-sided cutting insert is of the type that is tangentially mounted in the milling tool.

### BACKGROUND

Metal cutting milling tools using cutting inserts that are tangentially mounted are well known in the art. Such inserts are used in a wide range of milling applications, such as in square shoulder milling, slot milling, ramping, helical interpolation and face milling.

Tangential cutting inserts, also known as on-edge, or lay down, cutting inserts, are oriented in an insert holder of the milling tool in such a way that during cutting of a workpiece the cutting forces are directed along a major (thicker) dimension of the cutting insert. A technical advantage of this configuration is that the cutting insert can withstand greater cutting forces than when oriented radially, i.e. when the cutting forces are directed along a minor (thinner) dimension of the cutting insert.

EP3233341 discloses a double-sided tangentially mounted cutting insert that facilitates providing a screw hole of maximum size in the cutting insert while still maintaining an insert of substantial strength.

This known insert works well in most applications. However, in certain applications, this insert may have problems with chip control. This is especially prominent when the insert is used in operations utilizing a low depth of cut. In such operations it may be problematic to guide the chips away from the surface of the work piece. The chips may then get stuck between the work piece and the rotating milling tool which may lead to scratches in the worked surface.

Therefore, it is a need for improvements in double-sided tangential cutting inserts to alleviate some of the above-mentioned problems with chip control.

It is therefore an object of the present invention to present an improved double-sided tangential cutting insert that alleviates some of the above-mentioned problems.

### SUMMARY

According to the present invention, the above-mentioned object is achieved by means of a double-sided tangential cutting insert having the features defined in claim 1.

The double-sided tangential cutting insert according to the present invention comprises: two identical opposing end surfaces and a peripheral side surface extending between the opposing end surfaces. The peripheral side surface comprises two opposing identical major side surfaces, two opposing identical minor side surfaces and four corner surfaces. Each corner surface interconnects a major side surface and an adjacent minor side surface. A hole extends through the insert from one of the major side surfaces to the other of the major side surface. Each of said end surfaces comprises: two spaced apart major cutting edges, each major cutting edge being formed at an intersection between the end surface and one of the major side surfaces. Each of said end surfaces comprises two spaced apart minor cutting edges, each minor cutting edge being formed at an intersection between the end surface and one of the minor side surfaces. Each of said end surfaces comprises two diagonally opposite raised corners, each raised corner having a corner cutting edge. Each corner cutting edge is formed at an intersection between the end surface and one of the corner surfaces, each corner cutting edge positioned between a major cutting edge and a minor cutting edge. Each of said end surfaces comprises two diagonally opposite lowered corners, each lowered corner having a corner non-cutting edge. Each corner non-cutting edge is formed at an intersection between the end surface and one of the corner surfaces. Each corner non-cutting edge is positioned between a major cutting edge and a minor cutting edge. Major rake surfaces are positioned adjacent the major cutting edges. Minor rake surfaces are positioned adjacent the minor cutting edges. Cutting corner rake surfaces are positioned adjacent the corner cutting edges and non-cutting corner rake surfaces are positioned adjacent the non-cutting edges. At least one cutting corner rake surface comprises a groove that extends in a generally inward direction.

For purposes of the present application, the rake surfaces and the cutting edges should be considered adjacent although a land may be disposed between them. Having a land or honing between the rake surfaces and the cutting edges is well known in the art and the primary purpose is to strengthen the cutting edges.

A generally inward direction is the direction from the corner cutting edge towards the central part of the end surface.

The present inventors have realized that the configuration according to the present invention alleviates the problem of chip control when utilizing a low depth of cut. The groove, in the at least one corner rake surface, that extends in a generally inward direction helps to guide the produced chips away from the cutting edges and away from the surface of the work material. This decreases the risk of having chips getting trapped between the insert and the work surface and thus the risk of scratches in the work surface, due to trapped chips, is reduced. The insert according to the invention thus produces work surfaces with an improved surface finish. Furthermore, the improved chip control leads to less wear of the insert and to less heat generated in the insert. These factors lead to a prolonged lifetime for the cutting insert.

According to one embodiment, all cutting corner rake surfaces comprises a groove that extends in a generally inward direction.

This configuration ensures that the advantage of having an inwardly directed groove in the cutting corner rake surface is achieved for all indexing positions of the insert.

According to one embodiment, the groove extends from the corner cutting edge.

This configuration ensures that the groove is highly efficient in directing the chips away from the cutting edges since the groove starts as close as possible to where the chips are produced.

According to one embodiment, the groove extends to a support surface positioned on the end surface or to a transition surface connecting the support surface with the cutting corner rake surface.

This configuration ensures that the chips are directed away from the cutting corner rake surface. This reduces the risk that chips are trapped between the corner rake surface and the work surface.

According to one embodiment, the groove is substantially straight as seen in a view towards the end surface.

This configuration ensures that the chips are efficiently directed by the groove and reduces the risk that chips get trapped in the groove.

According to one embodiment, in a view towards the end surface the groove forms an angle α with a plane defined by the major side surface that is larger than 7°, preferably larger than 12°, and most preferably larger than 15°.

The angle is defined from the center of the groove where the center is the midpoint of the groove in a width direction of the groove.

This configuration ensures that the chips are efficiently directed away from the major cutting edge.

According to one embodiment, in a view towards the end surface the groove forms an angle α with a plane defined by the major side surface 31 that is smaller than 27°, preferably smaller than 22°, and most preferably smaller than 19°.

The angle is defined from the center of the groove where the center is the midpoint of the groove in a width direction of the groove.

This configuration ensures that chips are efficiently directed away from the minor cutting edge.

According to one embodiment, the groove has a groove bottom of generally concave shape with a first radius R3, the cutting corner rake surface has a generally concave shape in a cross section perpendicular to the length of the groove with a second radius R4, wherein the first radius R3 is smaller than the second radius R4.

The second radius R4 may in some embodiments be close to infinite since the cutting corner rake surface may be approximately straight in a cross section perpendicular to the length of the groove.

According to one embodiment, the groove has a depth D that is at least 0,03 mm, more preferably 0,05 mm.

This configuration ensures that the groove is deep enough to efficiently direct the chips in the desired direction.

According to one embodiment, the length of the groove is at least 5 % of the length of the diagonal between raised corners of the end surface, more preferably 10 %, most preferably 15 %.

This configuration ensures that the groove is long enough to be able to efficiently steer the chips in the desired direction.

According to one embodiment, two separate support surfaces for supporting the cutting insert when mounted in a milling tool are positioned on each side of a central plane CP that divides the end surfaces in two equal parts and extends along a central axis of the hole and is generally perpendicular to the planes of the major side surfaces and planes of the support surfaces.

This configuration ensures that a stable mounting of the cutting insert in the milling tool can be achieved.

According to one embodiment, the support surfaces are the surfaces of the end surface that are positioned closest to a median plane (MP) that extends along the central axis of the hole and is generally perpendicular to the planes of the major side surfaces and planes of the minor side surfaces.

According to one embodiment, each support surface is surrounded by a transition surface that extends in a direction away from the median plane and forms an obtuse angle with the support surface.

This configuration ensures that positioning of the cutting insert in the insert seat of the milling tool can be made with high accuracy since the transition surface will guide the cutting insert to the correct position if it is slightly misplaced to start with. Having the cutting inserts positioned in the correct position in the insert seats of the milling tool is of high importance when a high surface finish of the work surface is to be achieved. Having the inserts slightly out of place may lead to scratches in the work surface.

According to an embodiment, in a cross section perpendicular to the major side surfaces the transition surface forms a first angle δ with a plane defined by the major side surface and the major rake surface forms a second angle β with a plane defined by the major side surface, wherein the transition surface is adjacent the major rake surface and the second angle β is larger than the first angle δ.

This configuration ensures that chips created along the major cutting edge will only be in contact with the major rake surface since the smaller first angle δ of the transition surface ensures that the transition surface will not function as a rake surface. This implies that the rake surface will be relatively narrow and that chips will not be deformed by transitioning from one rake surface to another. A narrow rake surface implies that a chip will be in contact with the rake surface a relatively short distance. This combined with a small amount of deformation of the chips leads to less heat generation which is especially important when machining difficult materials such as stainless steel and heat resistant super alloys.

The invention also relates to a milling tool comprising a tool body and at least one double-sided tangential cutting insert according to any one of the above mentioned embodiments, wherein each of the at least one double-sided tangential cutting inserts is detachably mounted in an insert seat of the tool body.

### LIST OF DRAWINGS

Embodiments of the invention will now be described in detail with regard to the annexed drawings, in which:
Fig. 1 is a perspective view of a double-sided tangential cutting insert according to an embodiment of the present invention.
Fig. 2 is a view towards the major side surface of the double-sided tangential cutting insert of Fig. 1.
Fig. 3 is a view towards the minor side surface of the double-sided tangential cutting insert of Fig. 1.
Fig. 4 is a view towards the end surface of the double-sided tangential cutting insert of Fig. 1.
Fig. 4a is a cross-sectional view of a portion of the double-sided tangential cutting insert taken at section IVa-IVa of Fig. 4.
Fig. 4b is a cross-sectional view of a portion of the double-sided tangential cutting insert taken at section IVb-IVb of Fig. 4.
Fig. 4c is a cross-sectional view of a portion of the double-sided tangential cutting insert taken at section IVc-IVc of Fig. 4.
Fig. 5 is a perspective view of a milling tool according to an embodiment of the invention.
Fig. 6 is a perspective view of the milling tool of Fig. 5, with a double-sided tangential cutting insert removed.

### DETAILED DESCRIPTION OF EMBODIMENTS

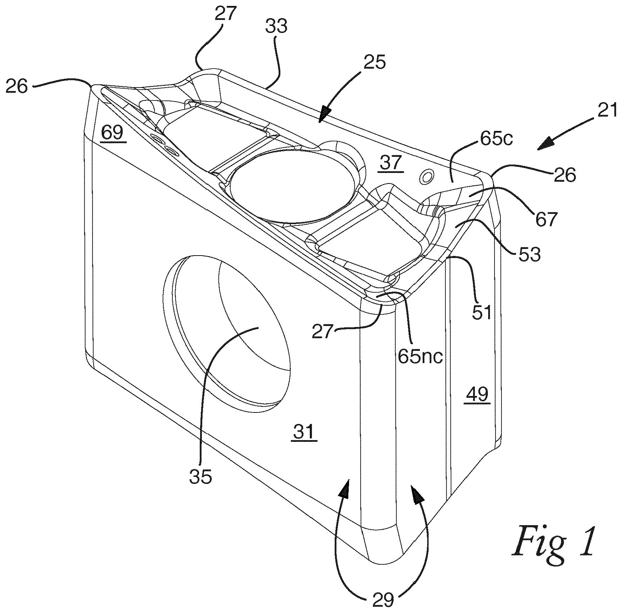

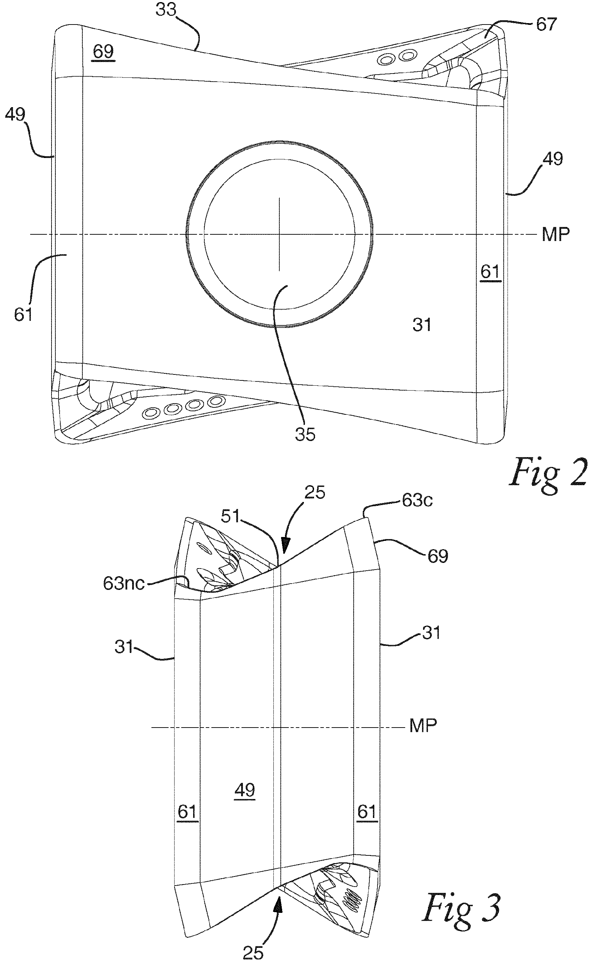

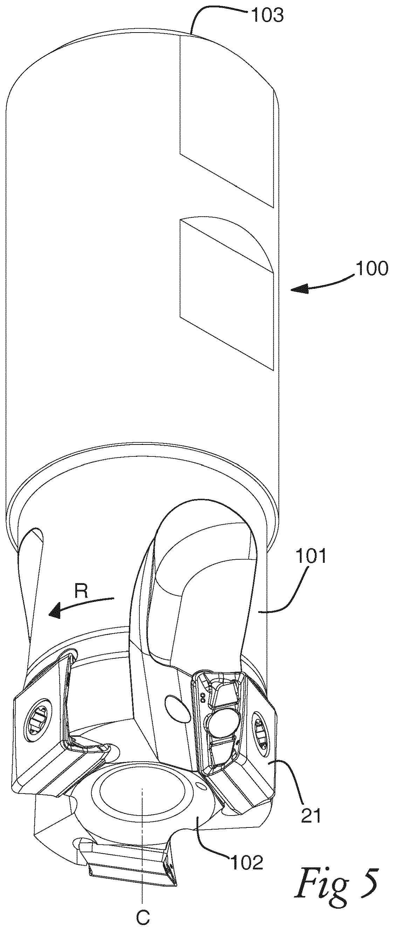

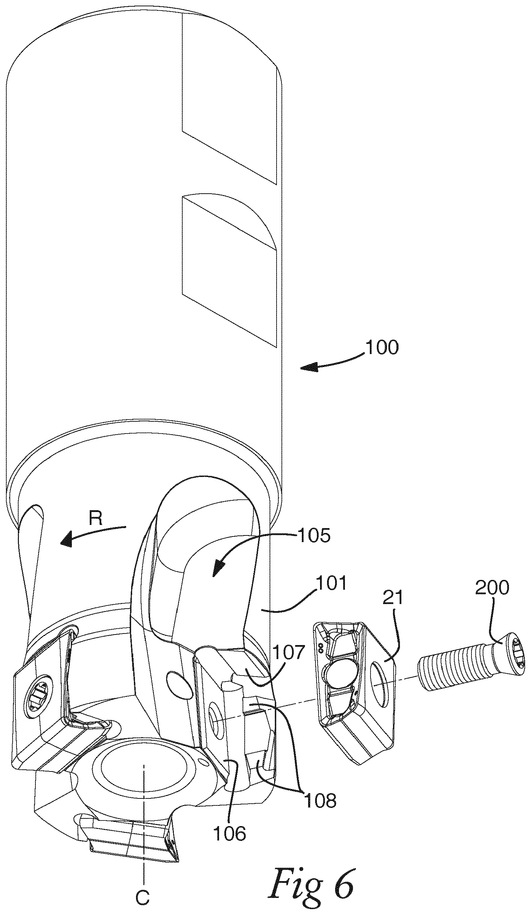

A double-sided tangential cutting insert 21 according to the present invention is shown in Figs. 1 to 4. The insert 21 is adapted for use in a milling tool 100, shown in Figs. 5 and 6, according to another aspect of the invention.

The insert 21 comprises two identical end surfaces 25, each end surface being generally rectangular in shape. The insert 21 further comprises a peripheral side surface 29 extending between the opposing end surfaces 25.

The peripheral side surface 29 comprises two opposing identical major side surfaces 31. The major side surfaces 31 are planar and parallel to each other. According to the embodiment illustrated in Figs. 1 to 4 each major side surface 31 comprises a major relief surface 69 adjacent each major cutting edge 33. Alternative embodiments include inserts having fewer or no such major relief surfaces. Each end surface 25 comprises two spaced apart major cutting edges 33 formed at an intersection between the end surface 25 and one of the major side surfaces 31. Thus, the insert 21 comprises four major cutting edges 33. Major rake surfaces 37 are formed in the end surfaces 25 adjacent the major cutting edges 33. For purposes of the present application, the rake surfaces and the major cutting edges should be considered adjacent although a land 34 may be disposed between them.

The peripheral side surface 29 further comprises two opposing identical minor side surfaces 49. The minor side surfaces 49 are generally planar and parallel to each other. Each end surface 25 comprises two spaced apart minor cutting edges 51 formed at an intersection of the end surface 25 and one of the minor side surfaces 49. Thus, the insert 21 comprises four minor cutting edges 51. Minor rake surfaces 53 are formed in the end surfaces 25 adjacent the minor cutting edges 51.

The peripheral side surface 29 further comprises four corner surfaces 61. Each corner surface 61 interconnects a major side surface 31 and a minor side surface 49.

A hole 35 extends through the insert 21 from one of the major side surfaces 31 to the other of the major side surfaces 31. The hole 35 is used to mount the insert 21 in an insert seat 106 of a milling tool 100 by means of a fastening element in the form of a screw 200.

Each end surface 25 comprises two diagonally opposite raised corners 26 and two diagonally opposite lowered corners 27. The raised corners 26 are raised in the sense that they are the corners farthest from a median plane (MP) that extends along the central axis of the hole 35 and is generally perpendicular to the planes of the major side surfaces 31 and planes of the minor side surfaces 49. Both the major cutting edges 33 and the minor cutting edges 51 descend towards the median plane (MP) when going from a raised corner 26 towards a lowered corner 27.

Each lowered corner 27 has a corner non-cutting edge 63nc. The corner non-cutting edges 63nc are formed at an intersection between the end surface 25 and one of the corner surfaces 61. Non-cutting corner rake surfaces 65nc are located adjacent the non-cutting edges 63nc. The non-cutting edges 63nc are not operative in the actual cutting process when the double-sided tangential cutting insert 21 is mounted and used in a milling tool 100.

Each raised corner 26 has a corner cutting edge 63c. The corner cutting edges 63c are formed at an intersection between the end surface 25 and one of the corner surfaces 61. Cutting corner rake surfaces 65c are located adjacent the cutting edges 63c.

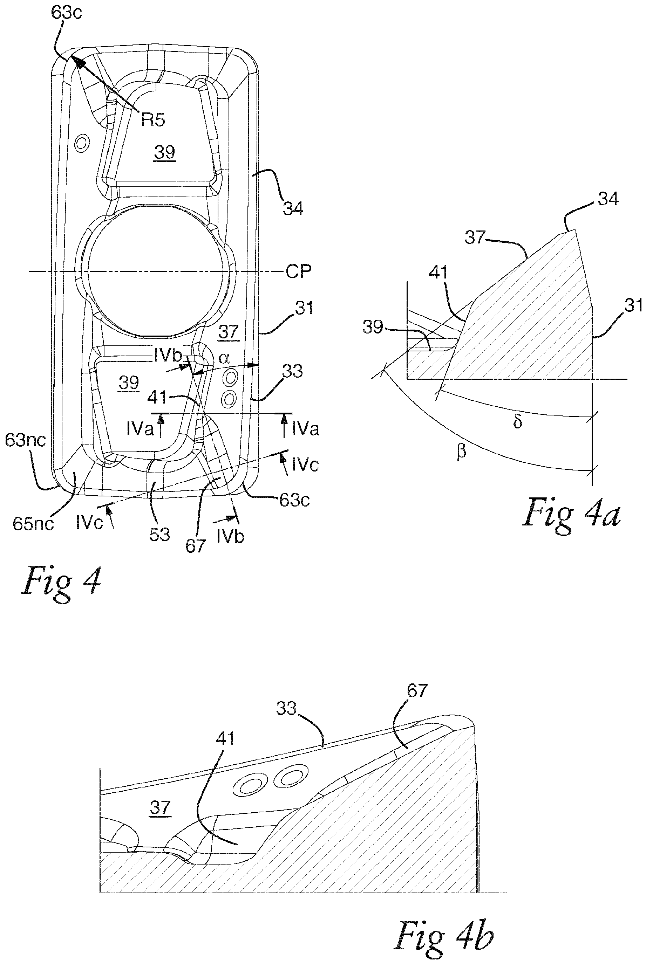

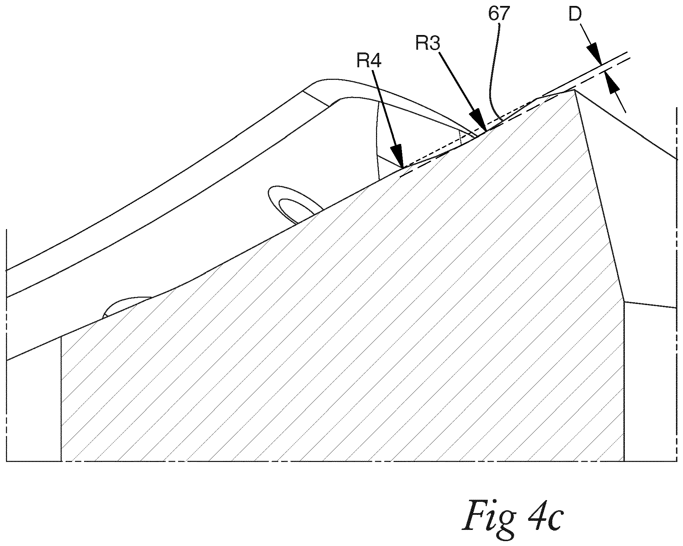

As illustrated in Fig. 4, the cutting corner rake surfaces comprise a groove 67. The groove 67 is generally straight and extends inward from the corner cutting edge 63c towards the central area of the end surface 25. The central area is the area located in the approximate vicinity of the geometrical center of the end surface 25. Preferably, the groove extends inward towards the geometrical center of the end surface 25. In the shown embodiment the groove 67 extends to a transition surface 41. The transition surface 41 transitions into a support surface 39 as will be described in more detail later.

The groove helps guide chips, produced during a cutting operation, away from the cutting edges. This reduces the risk of chips getting trapped between the insert 21 and the work surface. The work surface being the surface machined during the cutting operation. This improves the surface finish of the work surface since trapped chips has a risk of scratching the work surface. A further advantage of this embodiment is that the chips are efficiently transported away from the cutting edges of the insert 21 and this improves the heat control of the insert and the insert will generally be cooler during use than if no groove 67 is present on the insert 21. A cooler insert 21 leads to increased lifetime for the insert.

In a view towards the end surface 25 the groove 67 forms an angle α with a plane defined by the major side surface 31. The angle α is larger than 7°, preferably larger than 12°, and most preferably larger than 15°. The angle α is smaller than 27°, preferably smaller than 22°, and most preferably smaller than 19°.

Having the angle α of the groove larger than the specified values guides the chips away from the major cutting edge 33 and having the angle α of the groove smaller than the specified values guides the chips away from the minor cutting edge 51. This reduces the risk of chips getting trapped between the work surface and the major cutting edge 33 or the work surface and the minor cutting edge 51, respectively.

The length of the groove is at least 5 %, more preferably 10 %, and most preferably 15 % of the diagonal length between raised corners 26 of the end surface 25.

This ensures a groove long enough to efficiently guide the chips in the desired direction.

The cross-sectional view of Fig. 4c discloses a section perpendicular to the length of the groove 67. The groove 67 has a concave shape with radius R3. The standard solution without groove follows the tangent of the cutting corner rake surface 65c. The standard solution is seen as the upper dashed line in Fig. 4c. The cutting corner rake surface 65c has a concave shape, in this cross section perpendicular to the length of the groove 67, with a radius R4. The radius R4 is larger than the radius R3. The radius R4 can be infinite if the cutting corner rake surface 65c is straight in a cross section perpendicular to the length of the groove 67. The outer parts of the groove 67 farthest from the center of the groove in a width direction of the groove 67 comprises convex connection radii that connects the groove 67 with the cutting corner rake surface 65c to achieve a smooth transition between the two surfaces.

The groove 67 has a depth D. The depth D of the groove should preferably be at least 0,03 mm, more preferably 0,05 mm, to achieve efficient guidance of the chips away from the cutting edges. The depth D of the groove should preferably be smaller than 0,15 mm. If the depth D is larger the contact area between chips and the groove 67 will increase. Larger contact area leads to increased temperatures which leads to increased wear of the insert.

Here follow some specific values for the embodiment disclosed in the figures. The radius R3 is 3 mm and the depth D is 0,05 mm. The radius R5 of the corner cutting edge 63c is in this embodiment 0,8 mm. Generally, the efficiency of chip evacuation is improved if the radius R3 is larger than the radius R5 of the corner cutting edge 63c. The optimum ratio between depth D and radius R5 of the corner cutting edge 63c is thus 0,05/0,8 = 0,0625. The groove 67 is working efficiently at ratios between depth D and radius R5 of the corner cutting edge 63c in the range 0,04 to 0,2.

The cross-sectional view of Fig. 4b shows the entire length of the groove 67. Approximately the third of the groove 67 closest to the corner cutting edge 63c has a constant depth D. Farther from the corner cutting edge 63c the depth of the groove 67 decreases and reaches zero depth at the end of the groove 67. This configuration leads to the most efficient evacuation of chips.

Each end surface 25 further comprises two separate support surfaces 39 located on each side of a central plane (CP). The central plane (CP) divides the end surface 25 in two equal parts and extends along a central axis of the hole 35 and is generally perpendicular to the planes of the major side surfaces 31 and planes of the support surfaces 39. The two support surfaces 39 extend in a single common plane, a plane which is parallel to the median plane (MP). The support surfaces 39 are the areas of the end surface 25 that are closest to the median plane (MP).

Each support surface 39 is surrounded by a transition surface 41. The transition surface 41 extends in a direction away from the median plane (MP) and forms an obtuse angle with the support surface 39.

This configuration helps to precisely mount the insert 21 in its correct position in an insert seat 106 of the milling tool 100. The obtuse angle of the transition surface 41 guides the insert to its correct position on radial contact surfaces 108 of the milling tool 100.

The cross-sectional view of Fig. 4a shows how the transition surface 41 connects the support surface 39 with the major rake surface 37. The transition surface 41 forms a first angle (δ) with a plane defined by the major side surface 31 and the major rake surface 37 forms a second angle (β) with a plane defined by the major side surface 31. The second angle (β) is larger than the first angle (δ).

That the second angle (β) is larger than the first angle (δ) implies that a chip will only be in contact with the major rake surface 37 and will lose contact with the insert when approaching the transition surface 41 because the transition surface 41 drops off from the major rake surface 37 due to having the second angle (β) larger than the first angle (δ). The transition surface 41 will thus not function as a rake surface. This implies that the rake surface will be relatively narrow and that chips will not be deformed by transitioning from one rake surface to another. A narrow rake surface implies that a chip will be in contact with the rake surface a relatively short distance. This combined with a small amount of deformation of the chips leads to less heat generation which is especially important when machining difficult materials such as stainless steel and heat resistant super alloys.

Reference is now made to Figs. 5 and 6 which show a milling tool 100 according to an aspect of the invention. The milling tool 100 comprises a tool body 101 with a cylindrical base shape. The tool body includes a front end 102 and a rear end 103, between which a central rotation axis C extends. The milling tool 100 is rotatable in a direction of rotation R around the central rotation axis C. Insert seats 106 are formed in the tool body 101 in a peripheral surface of the tool body 101 at the front end 102. Chip rooms 105 are formed in the peripheral surface of the tool body 101 for efficiently transporting chips away from the work surface.

Double-sided tangential cutting inserts 21 are mounted in the insert seats 106 by means of a fastening element in the form of a screw 200. When mounted in the insert seat 106 one of the major side surfaces 31 of the double-sided tangential cutting insert will be in contact with the insert seat 106. One of the minor side surfaces 49 will be in contact with an axial contact surface 107 of the milling tool 100. Support surfaces 39 of the double-sided tangential cutting insert 21 will be in contact with two radial contact surfaces 108 when the insert 21 is mounted in the milling tool 100.

This configuration ensures a stable and precise mounting of the insert 21 to the insert seat 106. This configuration further ensures that one of the major cutting edges 33 extends approximately in the axial direction of the milling tool 100 and one of the minor cutting edges 51 extends approximately in the radial direction of the milling tool 100. This makes the milling tool 100 particularly suited for square shoulder milling.

While this invention has been illustrated and described in accordance with a preferred embodiment, it is recognized that variations and changes may be made therein without departing from the invention as set forth in the claims.

## Claims

1. A double-sided tangential cutting insert (21), comprising:
- two identical opposing end surfaces (25);
- a peripheral side surface (29) extending between the opposing end surfaces (25), the peripheral side surface (29) comprising two opposing identical major side surfaces (31), two opposing identical minor side surfaces (49) and four corner surfaces (61), each corner surface (61) interconnecting a major side surface (31) and an adjacent minor side surface (49);
- a hole (35) extending through the insert (21) from one of the major side surfaces (31) to the other of the major side surfaces (31);
- each of said end surfaces (25) comprising:
- two spaced apart major cutting edges (33), each major cutting edge being formed at an intersection between the end surface (25) and one of the major side surfaces (31);
- two spaced apart minor cutting edges (51), each minor cutting edge being formed at an intersection between the end surface (25) and one of the minor side surfaces (49);
- two diagonally opposite raised corners (26), each raised corner (26) having a corner cutting edge (63c), each corner cutting edge (63c) being formed at an intersection between the end surface (25) and one of the corner surfaces (61), each corner cutting edge (63c) positioned between a major cutting edge (33) and a minor cutting edge (51);
- two diagonally opposite lowered corners (27), each lowered corner (27) having a corner non-cutting edge (63nc), each corner non-cutting edge (63nc) being formed at an intersection between the end surface (25) and one of the corner surfaces (61), each corner non-cutting edge (63nc) positioned between a major cutting edge (33) and a minor cutting edge (51);
- major rake surfaces (37) adjacent the major cutting edges (31);
- minor rake surfaces (53) adjacent the minor cutting edges (51);
- cutting corner rake surfaces (65c) adjacent the corner cutting edges (63c); and
- non-cutting corner rake surfaces (65nc) adjacent the non-cutting edges (63nc),
**characterized in that** at least one cutting corner rake surface (65c) comprises a groove (67) that extends in a generally inward direction.

2. The double-sided tangential cutting insert according to claim 1, wherein all cutting corner rake surfaces (65c) comprises a groove (67) that extends in a generally inward direction.

3. The double-sided tangential cutting insert according to claim 1 or 2, **wherein** the groove (67) extends from the corner cutting edge (63c).

4. The double-sided tangential cutting insert according to any of the preceding claims, wherein the groove extends to a support surface (39) positioned on the end surface (25) or to a transition surface (41) connecting the support surface (39) with the cutting corner rake surface (65c).

5. The double-sided tangential cutting insert according to any of the preceding claims, **wherein** the groove (67) is substantially straight as seen in a view towards the end surface (25).

6. The double-sided tangential cutting insert according to claim 5, **wherein** in a view towards the end surface (25) the groove (67) forms an angle (α) with a plane defined by the major side surface (31) that is larger than 7°, preferably larger than 12°, and most preferably larger than 15°.

7. The double-sided tangential cutting insert according to claim 5 or 6, **wherein** in a view towards the end surface (25) the groove (67) forms an angle (α) with a plane defined by the major side surface (31) that is smaller than 27°, preferably smaller than 22°, and most preferably smaller than 19°.

8. The double-sided tangential cutting insert according to any of the previous claims, **wherein** the groove (67) has a groove bottom of generally concave shape with a first radius (R3), the cutting corner rake surface (65c) has a generally concave shape in a cross section perpendicular to the length of the groove (67) with a second radius (R4), wherein the first radius (R3) is smaller than the second radius (R4).

9. The double-sided tangential cutting insert according to any of the previous claims, **wherein** the groove (67) has a depth (D) that is at least 0,03 mm, more preferably 0,05 mm.

10. The double-sided tangential cutting insert according to any of the previous claims, **wherein** the length of the groove (67) is at least 5 % of the length of the diagonal between raised corners (26) of the end surface (25), more preferably 10 %, most preferably 15 %.

11. The double-sided tangential cutting insert according to any of the previous claims, **wherein** two separate support surfaces (39) for supporting the cutting insert when mounted in a milling tool (100) are positioned on each side of a central plane (CP) that divides the end surfaces (25) in two equal parts and extends along a central axis of the hole (35) and is generally perpendicular to the planes of the major side surfaces (31) and planes of the support surfaces (39).

12. The double-sided tangential cutting insert according to claim 11, **wherein** each support surface (39) is the surface of the end surface (25) that are positioned closest to a median plane (MP) that extends along the central axis of the hole (35) and is generally perpendicular to the planes of the major side surfaces (31) and planes of the minor side surfaces (49).

13. The double-sided tangential cutting insert according to claim 12, **wherein** each support surface (39) is surrounded by a transition surface (41) that extends in a direction away from the median plane (MP) and forms an obtuse angle with the support surface (39).

14. The double-sided tangential cutting insert according to claim 13, **wherein** in a cross section perpendicular to the major side surfaces (31) the transition surface (41) forms a first angle (δ) with a plane defined by the major side surface (31) and the major rake surface (37) forms a second angle (β) with a plane defined by the major side surface (31), **wherein** the transition surface is adjacent the major rake surface and the second angle (β) is larger than the first angle (δ).

15. A milling tool (100) comprising a tool body (101) and at least one double-sided tangential insert (21) according to any of the preceding claims, **wherein** each of the at least one double-sided tangential inserts (21) is detachably mounted in an insert seat (106) of the tool body (101).
